# EUROPEAN PATENT SPECIFICATION

(11) **EP 2 579 136 B1**
(45) Date of publication and mention of the grant of the patent: **02.12.2020**
(21) Application number: 11183882.7
(22) Date of filing: 04.10.2011
(51) Int. Cl.: G06F 3/048

(54) **Device with customizable controls**
Vorrichtung mit benutzerdefinierbaren Steuerungen
Dispositif avec commandes personnalisables

(43) Date of publication of application: 10.04.2013
(73) Proprietor: BlackBerry Limited, Waterloo, ON N2K 0A7 (CA)
(72) Inventor: Mainwaring, Alexander Brian, Waterloo, Ontario N2L 3W8 (CA); Williams, Tyler Lee, Waterloo, Ontario N2L 3W8 (CA); Pepper, Jamieson Robin, Waterloo, Ontario N2L 3W8 (CA)
(74) Representative: MERH-IP Matias Erny Reichl Hoffmann Patentanwälte PartG mbB

(56) References cited:
- US-A- 5 936 614
- US-A1- 2008 259 039
- US-A1- 2010 001 132

## Description

### BACKGROUND OF THE INVENTION

### 1. Field of Invention

The present invention relates generally to touchscreen devices, and more particularly to a touchscreen device with customizable controls and method therefor.

### 2. Description of Related Art

The evolution of computers is currently quite active in the mobile device environment. It is now well-known to implement a touchscreen as an input device as part of portable electronic devices. Indeed, there has been a veritable explosion of the number and type of devices implementing touchscreens that are configured to execute various applications on portable electronic devices and other computing environments.

US 2010/0001132 A1 discloses a display system in a flight deck adapted for displaying several different applications. Therein, "use modes" are provided for a touch-sensitive device which may be selected using a selection button.

US-A-5 936 614 D2 discloses a computer system enabling a user to design touch activated keyboards for use on a display surface without writing code. The computer system enables the user to resize and move the keyboard image anywhere on the display to allow the concurrent display of other applications running in an integrated operating environment.

US 2008/259039 A1 discloses methods, systems and graphical user interfaces for selecting a soft keyboard from a plurality of soft keyboards.

### SUMMARY

According to the present disclosure, there is provided a touchscreen device according to claim 1 and a method according to claim 6. The dependent claims relate to preferred embodiments.

In accordance with the invention, there is provided a touchscreen device according to claim 1. The touchscreen device includes a processor and a touchscreen. The processor is operably configured to receive input indicative of a selection of input elements for a subset of input elements from a set of given input elements. The subset is for providing application input data to a computer application. The subset is displayable on the touchscreen. The processor is further operably configured to render the subset on the touchscreen such that the subset is operably configured to receive the application input data. The subset is rendered outside the display area and remains on the touchscreen as long as the computer application is running.

The processor is operably configured to receive further input indicative of a size and location of a display area. The display area is for rendering output from the computer application. The display area is smaller than the touchscreen.

The processor may be operably configured to scale the output such that the output is completely rendered within the display area.

The processor may be operably configured to receive further input indicative of a selection of a location on the touchscreen such that a selected input element of the subset is rendered at the location.

The processor may be operably configured to receive input indicative of populating the subset may be further operably configured to receive data indicative of a selection from a list.

The set of given input elements may include virtual keyboard keys rendered at the touchscreen.

In accordance with the invention, there is provided a method according to claim 6 involving receiving, at a touchscreen device including a touchscreen, input indicative of a selection of input elements for a subset of input elements from a set of given input elements. The subset is for providing application input data to a computer application. The subset is displayable on the touchscreen. The method further involves rendering the subset on the touchscreen such that the subset is operably configured to receive the application input data. The subset is rendered outside the display area and remains on the touchscreen as long as the computer application is running.

The method involves receiving further input indicative of a size and location of a display area. The display area is for rendering output from the computer application. The display area is smaller than the touchscreen.

The method may also involve scaling the output such that the output is rendered within the display area.

Rendering the subset of the input elements on the touchscreen may involve rendering the subset of the input elements outside the display area.

The method may additionally involve receiving further input indicative of a selection of a location on the touchscreen such that a selected input element of the subset is rendered at the location.

The input indicative of populating the subset may include data indicative of a drag-and-drop selection on the touchscreen.

Receiving the input indicative of populating the subset may involve receiving data indicative of a selection from a list.

The list may include input elements of the set of given input elements.

The list may include combinations of the input elements of the set of given input elements.

Receiving the input indicative of populating the subset may involve receiving data from an input device other than the touchscreen.

The set of given input elements may include virtual keyboard keys rendered at the touchscreen.

The method may further involve downloading the computer application into a memory of the touchscreen device through a network connection.

The method may also involve executing the computer application on the touchscreen device.

In accordance with yet another example for understanding the invention there is provided a touchscreen device. The touchscreen device includes a touchscreen and a processor. The touchscreen device further includes means for receiving input indicative of populating a subset from a set of given input elements. The subset is for providing application input data to a computer application. The subset is displayable on the touchscreen. The touchscreen device also includes means for rendering the subset on the touchscreen such that the subset is operably configured to receive the application input data.

In accordance with yet another example for understanding the invention there is provided a non-transitory computer readable medium encoded with codes. The codes are for directing a processor to receive input indicative of populating a subset from a set of given input elements. The subset is for providing application input data to a computer application. The subset is displayable on the touchscreen. The codes are also for directing a processor to render the subset on the touchscreen such that the subset is operably configured to receive the application input data.

### BRIEF DESCRIPTION OF THE DRAWINGS

In drawings which illustrate implementations of the invention,
Figure **1** is a front view of a touchscreen device with customizable controls, according to non-limiting implementations;
Figure **2** is a schematic block diagram of the touchscreen device shown in Figure **1**;
Figure **3** is a front view of the touchscreen device shown in Figure **1****,** with a screen shot of a virtual keyboard;
Figure **4** is a front view of the touchscreen device shown in Figure **1** with a screen shot of a plurality of virtual keys;
Figure **5** is a front view of the touchscreen device shown in Figure **1** with a screen shot of a plurality of virtual keys of different sizes and shapes;
Figure **6** is a block diagram of a method for customizing controls at the touchscreen device of Figure. **1**;
Figure **7** is a front view of the touchscreen device shown in Figure **1** with a screen shot of a display area showing drag-and-drop function; and
Figure **8** is a front view of the touchscreen device shown in Figure **1** with a screen shot of a display area showing a list for selection; and
Figure **9** is a front view of the touchscreen device shown in Figure **1** with a screen shot of a display area; and
Figure **10** is a block diagram of a method for rendering input elements at the touchscreen device of Figure **1**.

### DETAILED DESCRIPTION

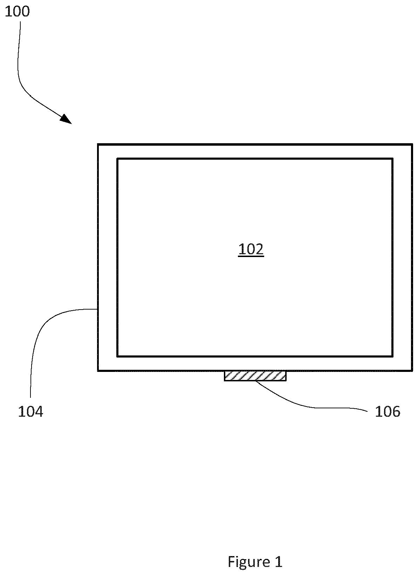

Referring to Figure **1**, a touchscreen device according to an implementation for providing customizable controls is shown generally at **100**. The device **100** includes a touchscreen **102** and a body **104**. The touchscreen device **100** also includes a connector **106** for connecting the touchscreen device **100** to another device (not shown). The other device may include a computer, an input device, an output device or another touchscreen device **100**.

In this implementation, some examples of touchscreen technologies that are suitable for the touchscreen **102** of the touchscreen device **100** are resistive system touchscreens, capacitive system touchscreens and surface acoustic wave system touchscreens. In addition, other touchscreen technologies may be used with the touchscreen device **100**. In other implementations still, alternative means by which input may be received over a screen can be suitably.

In this implementation, the body **104** is a durable lightweight material. The material should be lightweight so that the touchscreen device **100** is light and easy to carry, making the device more portable. The material should also be durable to protect the internal components of the touchscreen device **100**. For example, a suitable material to use for the body is plastic. In particular, Polycarbonate/Acrylonitrile Butadiene Styrene blends may be particularly suitable for the body **104**. In other implementations, other materials such as metal and metal alloys with suitable characteristics for an electronic device may be used.

The touchscreen device **100** includes a battery (not shown) to power the device. In the implementation shown, the connector **106** is primarily for supplying power to charge the battery in the touchscreen device **100** when connected to a power source. The connector **106** may also be used to connect the touchscreen device **100** to another device for data sharing. For example, the touchscreen device **100** may be connected to a personal computer through the connector **106** in order to download programs onto the device. Therefore, the connector **106** may be a standard USB™ connector; however, any other type of connector capable of charging the touchscreen device **100** or providing data sharing capabilities would be suitable. In other implementations, it will be appreciated that if a touchscreen device **100** was equipped with replaceable batteries or inductive charging technology, no connector would be required.

The touchscreen device **100** can be any type of touchscreen device that can be used in a self-contained manner. The touchscreen device **100** is enabled to perform various functions which include rendering information on the touchscreen **102**. In addition, the touchscreen device **100** is also enabled to receive input from the touchscreen **102**.

In the present implementation, the touchscreen device **100** comprises a tablet computing device. However, it will be appreciated that other implementations may comprise other types of touchscreen devices with a touchscreen, such as smart phones or personal gaming consoles. Furthermore, other implementations may even comprise a laptop computer, or a monitor set with a touchscreen interface.

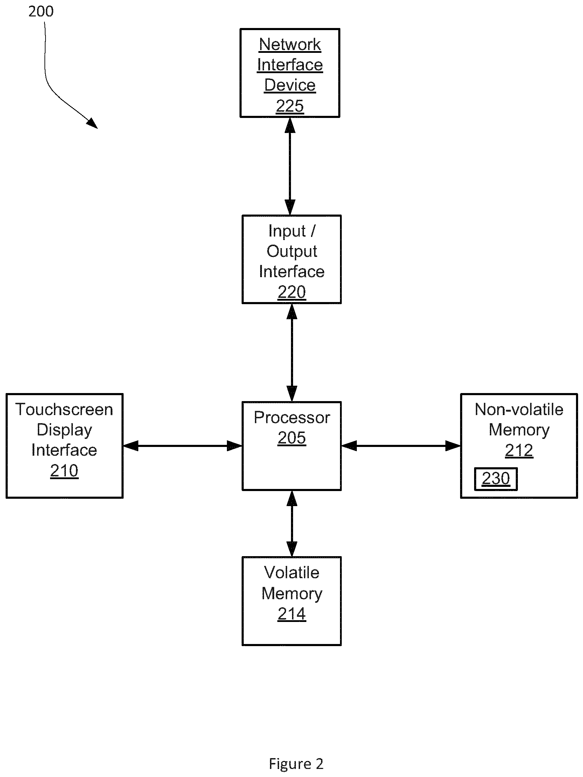

Referring to Figure **2**, a schematic block diagram of components of touchscreen device **100** is shown generally at **200**. In this implementation, the touchscreen device **100** includes a processor **205**, a touchscreen display interface **210**, a non-volatile memory **212**, a volatile memory **214**, and an input / output interface **220** all in communication with the processor **205**. It should be emphasized that the structure in Figure **2** is purely exemplary, and contemplates a touchscreen device **100** that can be used for both wireless voice (e.g. telephony) and wireless data (e.g. email, web browsing, text) communications.

The touchscreen display interface **210** is in communication with the processor **205** and the touchscreen **102**. Processor **205** is configured to communicate with non-volatile memory **212** and volatile memory **214** as needed during operation. Examples of non-volatile memory **212** include any type of non-transitory computer readable medium, Erasable Electronic Programmable Read Only Memory ("EEPROM"), Flash Memory, and as well as any other type of memory where the contents of the memory are preserved if the memory is powered off. Examples of volatile memory include random access memory ("RAM") as well as any other type of memory where the contents are lost once the memory is powered off. Programming instructions that implement the functional teachings of the touchscreen device **100** as described herein are typically maintained, persistently, in non-volatile memory **212** and used by processor **205** which makes appropriate utilization of volatile memory **214** during the execution of such programming instructions. Those skilled in the art will now recognize that non-volatile memory **212** and volatile memory **214** are examples of computer readable media that can store programming instructions executable on processor **205**. In particular, non-volatile memory **212** can store a computer application **230**, which can be processed by processor **205**. Examples of applications include games, educational programs, map applications, e-readers, and any other type of applications typically available for a touchscreen device.

In the present implementation, the Input / Output interface **220** is in communication with the processor **205** and a network interface device **225**. The network interface device **225** connects the touchscreen device **100** to a network for downloading the computer application **230** through the network into the non-volatile memory **212**. Therefore, the network interface device **225** may be in communication with the connector **106**. Alternatively, the network interface device **225** may also be connected to a network wirelessly using technologies such as Wi-Fi™, Bluetooth™, and cellular networks.

In other implementations, a user input / output interface may connect a processor to other devices such as a display device (eg. cathode ray tube, liquid crystal display, plasma display, organic light emitting diode), speakers, microphones, buttons or keys on a touchscreen device, an external keyboard or a pointer device. It will be appreciated that other devices capable of generating output based on data received from the processor or other devices capable of sending data to the processor based on input at the device may also be connect to the input / output interface. Furthermore, it will be appreciated that in some implementations, the input / output interface will be capable of handling data from several devices, all of which are in communication with the processor. In addition, it is also contemplated that a touchscreen device may include a plurality of processors instead of a single processor.

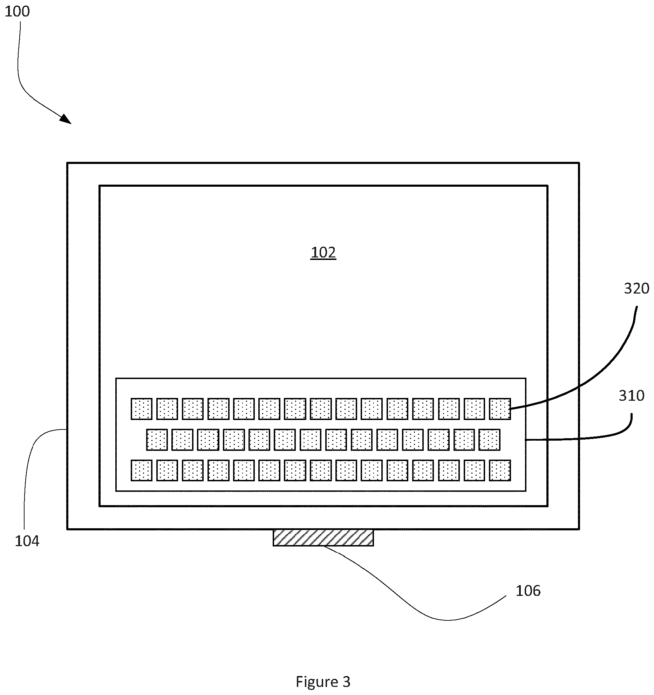

Referring to Figure **3**, the touchscreen device **100** is shown with a virtual keyboard **310** rendered on the touchscreen **102**. In the present implementation, the virtual keyboard **310** provides a set of given input elements where each input element is represented by a virtual key **320**. Each virtual key **320** is configured to receive input on the touchscreen through any suitable touchscreen mechanisms. The input from the touchscreen is then communicated via the touchscreen display interface **210** to the processor **205**.

In the present implementation, the virtual keyboard **310** may include a layout similar to one that is normally on a physical keyboard. It will be appreciated that the specific layout of a physical keyboard varies depending on the country where the keyboard is intended to be used. Furthermore, the virtual keyboard **310** may be compressed or otherwise slightly modified to allow it to fit on the touchscreen **102**. During operation of the touchscreen device **100**, the virtual keyboard **310** may appear on the touchscreen **102** when an application requests keyboard input. During periods where no keyboard input is requested, the virtual keyboard **310** may be hidden so that the keyboard does not obstruct the output rendered to the touchscreen **102**. Hiding of the virtual keyboard **310** may be initiated when an application no longer requires any input to be received from the touchscreen. In addition, the virtual keyboard may also be hidden after an automatic time-out indication is generated after a determined period of inactivity at the touchscreen **102**.

In other implementations, a touchscreen device may allow for the use of a physical keyboard connected to the device through the connector. The physical keyboard may be directly connected to the connector, or it may be connected through a docking station. In yet another implementation, another type of touchscreen device may also include a physical keyboard permanently attached to the touchscreen device, for example as in a laptop. In both of these cases, the physical keyboard would provide a set of given input elements to a processor.

Although the only devices described to provide a set of given input elements have been a physical keyboard or a virtual keyboard, it should be appreciated that other methods of inputs as well as other input devices may be used to provide the set of given input elements. For example, other types of input devices capable of providing a set of given input elements are joysticks, video game controllers, pointer devices, and touchscreens without a virtual keyboard.

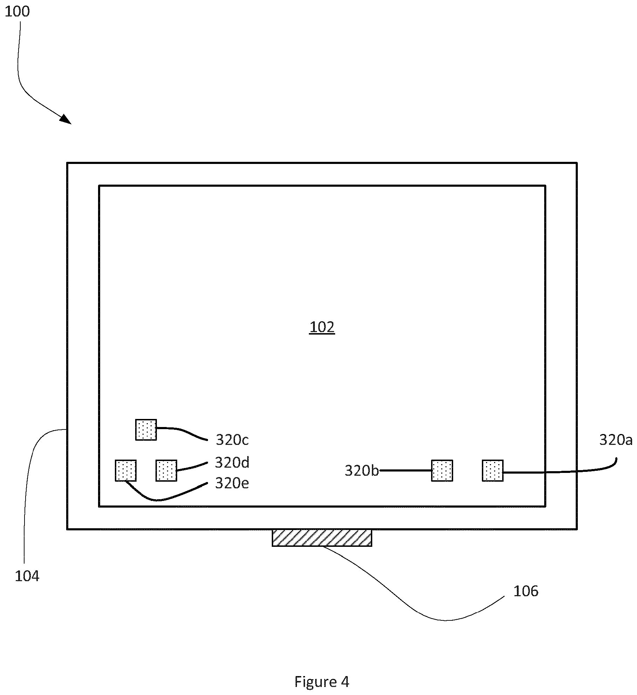

Referring to Figure **4**, the touchscreen device **100** is shown with a subset of input elements rendered at touchscreen **102**. As shown in the present implementation, the subset of input elements is a plurality of virtual keys **320**a-e. The plurality of virtual keys **320**a-e is configured to receive data corresponding to application input data requested during execution of the computer application **230**. Application input data includes input data that the computer application **230** may frequently request while it is running. For example, if the computer application **230** is a video game requiring input data corresponding to the arrow keys of a keyboard, the application input data would be data corresponding to the arrow keys of a keyboard. In contrast to the keyboard **310** which may be hidden after a determined period of inactivity at the touchscreen **102**, the plurality of virtual keys **320**a-e will remain on the touchscreen as long as the computer application **230** is running.

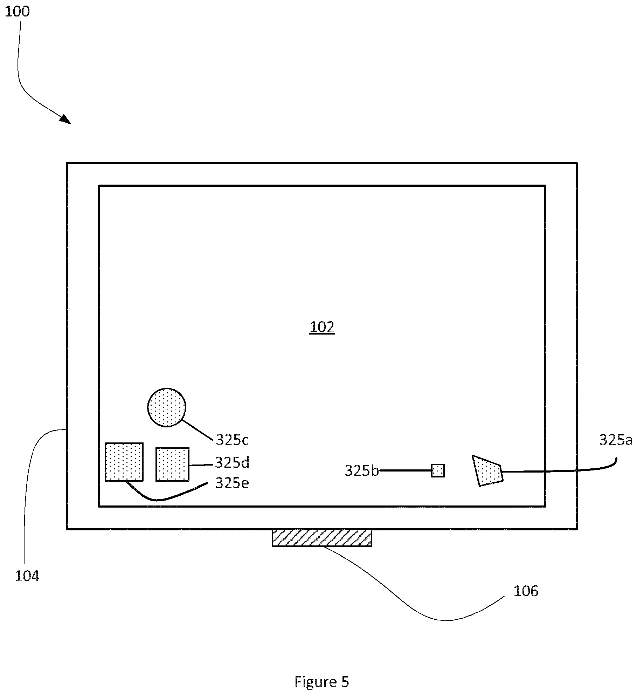

Referring to Figure **5**, the touchscreen device **100** is shown with a subset of input elements rendered at touchscreen **102** in accordance with another implementation. As shown in the present implementation, the subset of input elements is a plurality of virtual keys **325**a-e. The plurality of virtual keys **325**a-e is similar to the plurality of virtual keys **320**a-e discussed above in connection with Figure **4** and each virtual keys **325**a-e may correspond to each of the virtual keys **320**a-e respectively. The plurality of virtual keys **325**a-e is configured to receive data corresponding to application input data requested during execution of the computer application **230**. In contrast to merely rendering, the virtual keys **320**a-e as they would have appeared in the virtual keyboard **310**, the processor **205** has changed the size and shape of the virtual keys **320**a-e into various sizes and shapes of the virtual keys **325**a-e. For example, once virtual keys 320a-3 are selected and/or populates, further input can be received at touchscreen device 102, the further input indicative that a shape and/or size virtual keys 320a-e are to be changes, resulting in virtual keys 325a-e. Any suitable method can be used to indicate that a change in shape and/or size of virtual keys 320a-e are to occur, including but not limited to choosing new shapes and/or sizes from a menu, touchscreen input, input indicative that a shape of a given side of a given virtual key 320a-e is to be changes, and the like.

It is appreciated from Figure 5 that virtual keys **325**a and **325**c are rendered as an irregular polygon and circle respectively, for example. Further, virtual keys **325**d and **325**e are rendered in a larger size than corresponding virtual keys **320**d and **320**e and virtual key **325**b is rendered in a smaller size than corresponding virtual keys **320**b. However, it is appreciated that shapes are not limited to squares, irregular, polygons and circles, and that any suitable shape and/or change in shape is within the scope of present implementations. Furthermore, a given virtual key 320a-3 can undergo any suitable combination of a change in shape and a change in size, which can be performed in any suitable order.

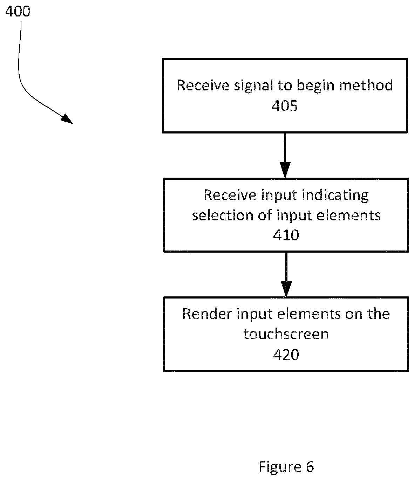

Referring to Figure **6**, a flowchart representing method for rendering customizable controls is shown generally at **400**. In order to assist in the explanation of method **400**, it will be assumed that method **400** is performed using the touchscreen device **100**. Furthermore, the following discussion of method **400** will lead to a further understanding of touchscreen device **100** and its various components. However, it is to be understood that touchscreen device **100** and/or method **400** can be varied, and need not work exactly as discussed herein in conjunction with each other, and that such variations are within the scope of present implementations. It is appreciated that in the following description, method **400** is implemented in touchscreen device **100** by processor **205**. Furthermore, in this particular implementation, the blocks generally represent codes read from the non-volatile memory **212**, for directing the processor **205** to manage input received from a user for the purpose of rendering input elements on the touchscreen **102**. The actual code to implement each block may be written in any suitable programming language, such as Flash™, Java, Delphi®, C, and/or C++.

The method **400** begins at **405** when a request is received at the processor **205** to begin the method. This request can be received from the touchscreen **102** through the touchscreen display interface **210** as a result of input at the touchscreen. It will be appreciated that other types of input, such as a short-cut key on the touchscreen device **100** or input from another input device connected to the input/output interface **220**, may generate the request. Alternatively, the request may be generated internally by the computer application **230** while the application is being executed or automatically under predetermined conditions. It will be further appreciated that the origin of the request may be anything as long as the request triggers the processor **205** to begin method **400**.

At block **410,** the processor **205** receives input indicating a selection and/or a populating of a subset of input elements. For example, after receiving the input, the processor **205** can populate the subset of input elements with the selected input elements. However, in other implementations, the processor 205 populates the subset of input elements when receiving the input. In the present implementation, the subset of input elements is the plurality of virtual keys **320**a-e displayable on the touchscreen **102**. Furthermore, the plurality of virtual keys **320**a-e selected from the virtual keyboard **310** such that computer application **230** would generally only request application input data from the plurality of virtual keys **320**a-e. Therefore, virtual keys of the virtual keyboard **310**, which are not part of the plurality of virtual keys **320**a-e, are generally not requested for input when executing the computer application **230**. It will be appreciated that the plurality of virtual keys is not limited to exactly five virtual keys and that the subset may include more or less virtual keys depending on the requirements of the computer application **230**.

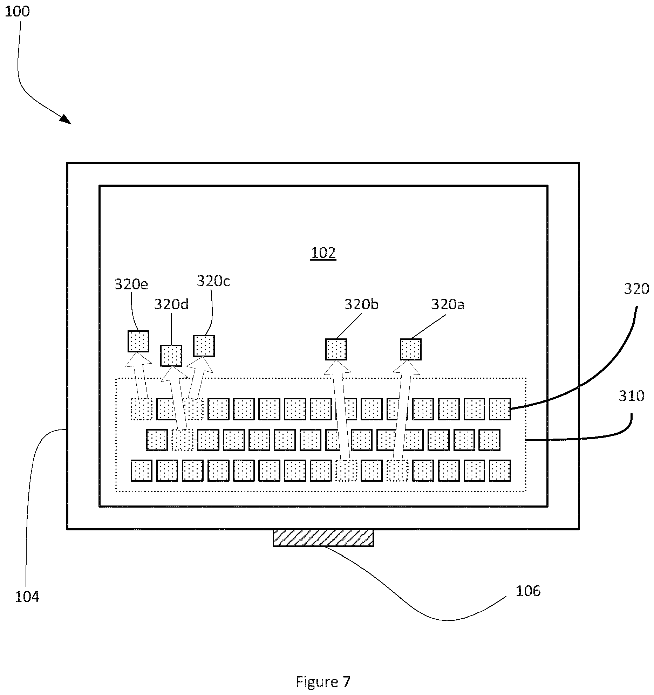

The input indicating a selection of the plurality of virtual keys **320**a-e in the method **400** may include data of various types. For example, referring to Figure **7**, one implementation of the input indicating a selection of the plurality of virtual keys **320**a-e may involve code directing the processor **205** to receive data indicative of a drag-and-drop selection process on the touchscreen **102**. This data may result from dragging a virtual key from the virtual keyboard **310** to a location off of the virtual keyboard to indicate the selection of the plurality of virtual keys **320**a-e, as represented by the arrows in Figure **7**. In the implementation shown, the plurality of virtual keys **320**a-e will automatically be repositioned as shown in Figure **4**. In other implementations, the plurality of virtual keys **320**a-e may be positioned at a location where the virtual key was "dropped". Furthermore, although this implementation renders the virtual keys in the format of the virtual keyboard **310**, it is contemplated that in other implementations that the virtual keys may be rendered on the touchscreen **102** in a format other than a virtual keyboard where the same drag-and-drop selection method can be used.

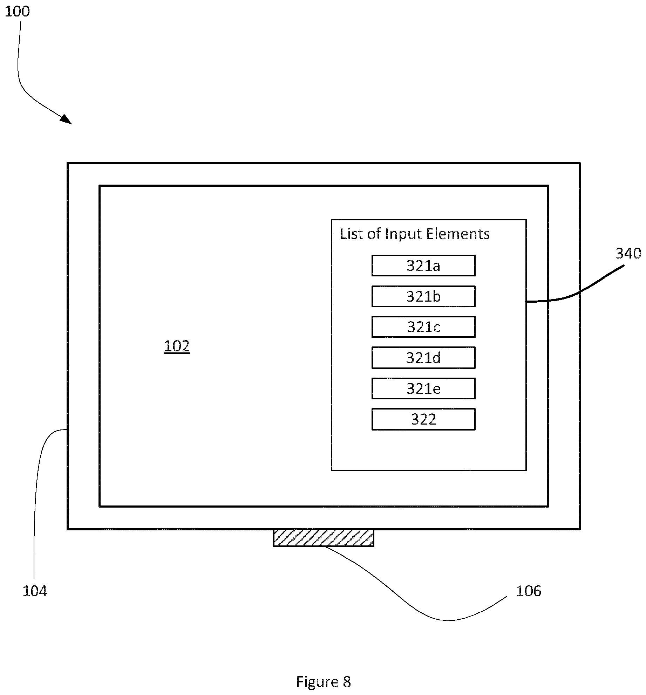

In another example shown in Figure **8**, the processor **205** may be directed to receive data indicative of a selection from a list **340** rendered on the touchscreen **102.** It is contemplated that in other implementations, a list may be entirely separate from the touchscreen device **100**, such as in a manual. The data indicative of a selection from the list **340** may also be received from any input device capable of providing input to the processor **205** including the touchscreen **102**. In the present implementation, the list **340** is presented on the touchscreen **102** and includes list items **321**a-e, and **322** where list items **321**a-e correspond to virtual keys **320**a-e respectively. When the processor **205** receives data indicative of each of the list items **321**a-e, the processor will render each of the plurality of virtual keys **320**a-e respectively. The list **340** may also include list items corresponding to pre-determined combinations of the virtual keys of the virtual keyboard **310**, such as keys used for the computer application **230**. In the present implementation, list item **322** corresponds to the combination comprising the plurality of virtual keys **320**a-e. Therefore, when the processor **205** receives data indicative of list item **322**, the processor will render the plurality of virtual keys **320**a-e respectively. By providing combinations of virtual keys, the selection process is more efficient compared with selecting individual virtual keys. It will be appreciated that in other implementations where the set of given input elements is something other than a virtual keyboard, the list may include the input elements of the set of given input elements and combinations of the input elements of the set of given input elements.

In other implementations of a touchscreen device with a processor for carrying out method **400** where the set of given input elements is not a virtual keyboard, it should be noted that the subset of input elements are still displayable on the touchscreen of the touchscreen device. Furthermore, as discussed above, the set of given input elements need not be limited to correspond to keys of a keyboard. For example, receiving input indicating a selection of the plurality of virtual keys **320**a-e may involve receiving data from an input device other than the touchscreen **102**. Examples of input devices other than the touchscreen include an external keyboard, a joystick, a video game controller, or a mouse.

In instances where a plurality of virtual keys includes an input element that does not correspond to a key of a keyboard, a virtual key is still generated to represent the input of the input element. For example, if an input element corresponds to moving a joystick up, where the set of given input elements includes all possible input from a joystick, the subset of input elements would include a virtual key displayable on a touchscreen for receiving input corresponding to moving the joystick up.

When the processor **205** receives input indicating a selection of a subset of input elements as described in block **410**, the processor **205** may further receive input indicative of a selection of a plurality of locations on the touchscreen **102** where the plurality of virtual keys **320**a-e are to be rendered. The input indicative of a selection of a plurality of locations on the touchscreen **102** where the plurality of virtual keys **320**a-e are to be rendered can be received through the touchscreen display interface **210** as a result of input at the touchscreen **102**. For example, the drag-and-drop selection process described above can indicate the plurality of locations for the plurality of virtual keys **320**a-e by using the "drop" location. It will be appreciated that other types of input, such from another input device connected to the input/output interface **220**, may receive input indicative of a selection of a plurality of locations. Alternatively, the input indicative of a selection of a plurality of locations may be generated internally by the computer application **230**. For example, the computer application **230** may have a pre-determined list of locations for the plurality of virtual keys **320**a-e which is automatically applied during method **400**.

At block **420,** the processor **205** renders the plurality of virtual keys **320**a-e on the touchscreen **102**. In this implementation, the plurality of virtual keys **320**a-e are enabled to receive input at the touchscreen **102** corresponding to the application input data for the computer application **230** executed by the processor **205**. Again, it will be appreciated that the plurality of virtual keys is not limited to exactly five virtual keys and that the subset may include more or less virtual keys depending on the requirements of the computer application **230**.

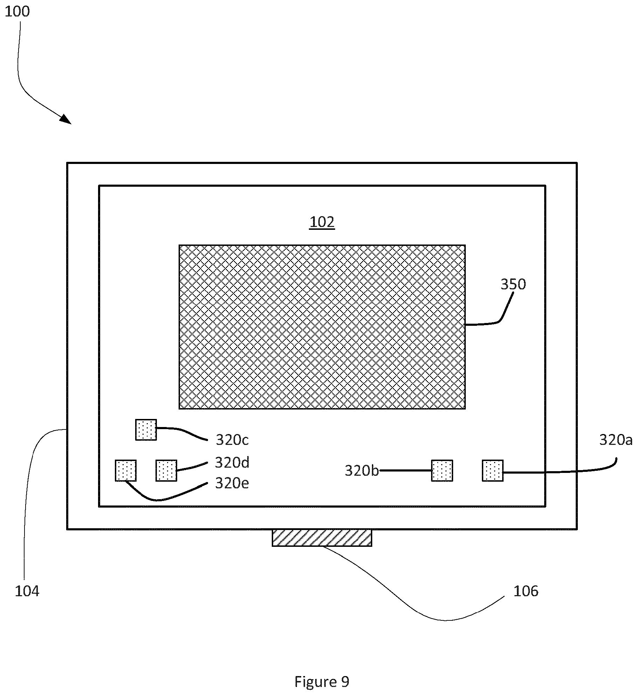

Referring to Figure **9**, the touchscreen device **100** is shown with a subset of input elements. As shown in this implementation, the subset of input elements is a plurality of virtual keys **320**a-e, which is identical to the plurality of virtual keys shown in Figure **4**. The plurality of virtual keys **320**a-e is configured to receive data corresponding to application input data requested during execution of the computer application **230**. Application input data includes input data that the computer application **230** may frequently request while it is running. For example, if the computer application **230** is a video game requiring input data corresponding to the arrow keys of a keyboard, the application input data would be data corresponding to the arrow keys of a keyboard. In contrast to the keyboard **310** which may be hidden after a determined period of inactivity at the touchscreen **102**, the plurality of virtual keys **320**a-e will remain on the touchscreen as long as the computer application **230** is running. In the present implementation, the touchscreen device **100** includes, a display area **350** is shown. The display area **350** is a portion of the touchscreen **102** for rendering output from the computer application **230**. Therefore, it will be appreciated that the remaining area of the touchscreen **102** will not be available for rendering output from the computer application **230**. Although the display area **350** is shown to be smaller than the full size of the touchscreen **102** in the present implementation, it should be appreciated that a display area can be equal to the full size of the touchscreen **102**. It will also be recognized that the plurality of virtual keys **320**a-e may be rendered within the display area **350** such that a virtual key may overlap a small portion of the output from the computer application **230**.

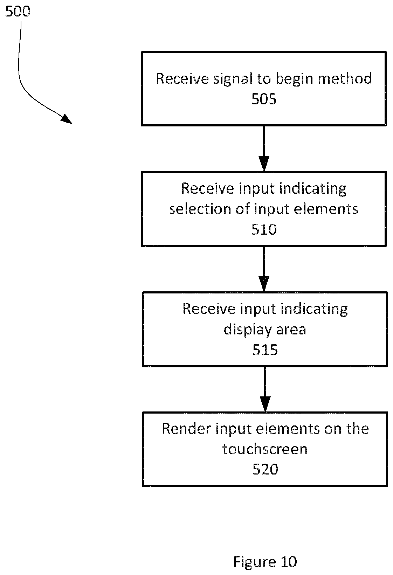

Referring to Figure **10**, a flowchart representing method for rendering customizable controls is shown generally at **500**. In order to assist in the explanation of method **500**, it will be assumed that method **500** is performed using the touchscreen device **100**. Furthermore, the following discussion of method **500** will lead to a further understanding of touchscreen device **100** and its various components. However, it is to be understood that touchscreen device **100** and/or method **500** can be varied, and need not work exactly as discussed herein in conjunction with each other, and that such variations are within the scope of present implementations. It is appreciated that in the following description, method **500** is implemented in touchscreen device **100** by processor **205**. Furthermore, in this particular implementation, the blocks generally represent codes read from the non-volatile memory **212**, for directing the processor **205** to manage input received from a user for the purpose of rendering input elements on the touchscreen **102**. The actual code to implement each block may be written in any suitable programming language, such as Flash™, Java, Delphi®, C, and/or C++.

The method **500** begins at **505** when a request is received at the processor **205** to begin the method. This request can be received from the touchscreen **102** through the touchscreen display interface **210** as a result of input at the touchscreen. It will be appreciated that other types of input, such as a short cut key on the touchscreen device **100** or input from another input device connected to the input/output interface **220**, may generate the request. Alternatively, the request may be generated internally by the computer application **230** while the application is being executed or automatically under predetermined conditions. It will be further appreciated that the origin of the request may be suitable origin such that the request triggers the processor **205** to begin method **500**.

At block **510** processor **205** receives input indicating a selection and/or populating of a subset of input elements. For example, after receiving the input, the processor **205** can populate the subset of input elements with the selected input elements. However, in other implementations, the processor 205 populates the subset of input elements when receiving the input. In the present implementation, the subset of input elements is the plurality of virtual keys **320**a-e displayable on the touchscreen **102**. Furthermore, the plurality of virtual keys **320**a-e are selected from the virtual keyboard **310** such that computer application **230** would generally only request application input data from the plurality of virtual keys **320**a-e. Therefore, virtual keys of the virtual keyboard **310**, which are not part of the plurality of virtual keys **320**a-e, are generally not requested for input when executing the computer application **230**. It will be appreciated that the plurality of virtual keys is not limited to exactly five virtual keys and that the subset may include more or less virtual keys depending on the requirements of the computer application **230**.

The input indicating a selection of the plurality of virtual keys **320**a-e in the method **500** may include data of various types. For example, referring back to Figure **7**, one implementation of the input indicating a selection of the plurality of virtual keys **320**a-e may involve code directing the processor **205** to receive data indicative of a drag-and-drop selection process on the touchscreen **102**. This data may result from dragging a virtual key from the virtual keyboard **310** to a location off of the virtual keyboard to indicate the selection of the plurality of virtual keys **320**a-e. In the implementation shown, the plurality of virtual keys **320**a-e will automatically be repositioned as shown in Figure **4**. In other implementations, the plurality of virtual keys **320**a-e may be positioned at a location where the virtual key was "dropped". Furthermore, although this implementation renders the virtual keys in the format of the virtual keyboard **310**, it is contemplated that in other implementations that the virtual keys may be rendered on the touchscreen **102** in a format other than a virtual keyboard where the same drag-and-drop selection method can be used.

Referring back to Figure **8**, another implementation for the selection of the plurality of virtual keys **320**a-e in the method **500** can also be applied. The processor **205** can receive data indicative of a selection from a list **340** rendered on the touchscreen **102**. It is contemplated that in other implementations, a list may be entirely separate from the touchscreen device **100**, such as in a manual. The data indicative of a selection from the list **340** may also be received from any input device capable of providing input to the processor **205** including the touchscreen **102**. In the present implementation, the list **340** is presented on the touchscreen **102** and includes list items **321**a-e, and **322** where list items **321**a-e correspond to virtual keys **320**a-e respectively. When the processor **205** receives data indicative of each of the list items **321**a-e, the processor will render each of the plurality of virtual keys **320**a-e respectively. The list **340** may also include list items corresponding to pre-determined combinations of the virtual keys of the virtual keyboard **310**, such as keys used for the computer application **230**. In the present implementation, list item **322** corresponds to the combination comprising the plurality of virtual keys **320**a-e. Therefore, when the processor **205** receives data indicative of list item **322**, the processor will render the plurality of virtual keys **320**a-e respectively. By providing combinations of virtual keys, the selection process is more efficient compared with selecting individual virtual keys. It will be appreciated that in other implementations where the set of given input elements is something other than a virtual keyboard, the list may include the input elements of the set of given input elements and combinations of the input elements of the set of given input elements.

In another example, the processor **205** receives data indicative of a selection from a list. The list may be rendered on the touchscreen **102** or the list may be entirely separate from the touchscreen device **100**, such as in a manual. The data indicative of a selection from a list may also be received from any input device capable of providing input to the processor **205** including the touchscreen **102**. In the present implementation, the list may be a list presented on the touchscreen of all the virtual keys of the virtual keyboard **310**. The list may also include pre-determined combinations of the virtual keys of the virtual keyboard **310**, such as keys used for the computer application **230**. By providing combinations of virtual keys, the selection process is more efficient compared with selecting individual virtual keys. It will be appreciated that in other implementations where the set of given input elements is something other than a virtual keyboard, the list may include the input elements of the set of given input elements and combinations of the input elements of the set of given input elements.

In other implementations of a touchscreen device with a processor for carrying out method **500** where the set of given input elements is not a virtual keyboard, it should be noted that the subset of input elements must still be displayable on the touchscreen of the touchscreen device. Furthermore, as discussed above, the set of given input elements need not be limited to correspond to keys of a keyboard. For example, receiving input indicating a selection of the plurality of virtual keys **320**a-e may involve receiving data from an input device other than the touchscreen **102**. Examples of input devices other than the touchscreen include an external keyboard, a joystick, a video game controller, or a mouse.

In instances where a plurality of virtual keys includes an input element that does not correspond to a key of a keyboard, a virtual key is still generated to represent the input of the input element. For example, if an input element corresponds to moving a joystick up, where the set of given input elements includes all possible input from a joystick, the subset of input elements would include a virtual key displayable on a touchscreen for receiving input corresponding to moving the joystick up.

When the processor **205** receives input indicating a selection and/or populating of a subset of input elements as described in block **510**, the processor **205** may further receive input indicative of a selection of a plurality of locations on the touchscreen **102** where the plurality of virtual keys **320**a-e are to be rendered. The input indicative of a selection of a plurality of locations on the touchscreen **102** where the plurality of virtual keys **320**a-e are to be rendered can be received through the touchscreen display interface **210** as a result of input at the touchscreen **102**. For example, the drag-and-drop selection process described above can indicate the plurality of locations for the plurality of virtual keys **320**a-e by using the "drop" location. It will be appreciated that other types of input, such from another input device connected to the input/output interface **220**, may receive input indicative of a selection of a plurality of locations. Alternatively, the input indicative of a selection of a plurality of locations may be generated internally by the computer application **230**. For example, the computer application **230** may have a pre-determined list of locations for the plurality of virtual keys **320**a-e which is automatically applied during method **500**. It will be appreciated that the plurality of virtual keys is not limited to exactly five virtual keys and that the subset may include more or less virtual keys depending on the requirements of the computer application **230**.

At block **515,** processor **205** receives input indicating a size and location of a display area **350** on the touchscreen **102**. The input indicating the size and location of the display area **350** on the touchscreen **102** may include data received from the touchscreen display interface **210** as a result of input at the touchscreen. It will be appreciated that other types of input, such as a short cut key (not shown) on the touchscreen device **100** or input from another input device connected to the input/output interface **220**, may be used to generate the input indicating the size and location of the display area **350** on the touchscreen **102**. Alternatively, the input indicating the size and location of the display area **350** on the touchscreen **102** may be automatically generated internally when executing the computer application **230**. It will be further appreciated that the origin of the input indicating the size and location of the display area **350** on the touchscreen **102** may be suitable origin as long as the input triggers the processor **205** to create the display area **350** on the touchscreen **102**. Referring back to Figure **7**, showing the present implementation, the display area **350** is smaller than the touchscreen **102**. However, it should be appreciated that the display area **350** may also occupy the entire touchscreen **102**.

After the input indicating the size and location of the display area **350** on the touchscreen **102** is received, the processor **205** may additionally scale the output from the computer application **230** such that the output is completely rendered within the display area **350**. For example, if the output from the computer application **230** is coded to cause the processor **205** to render the application's output over the entire touchscreen **102** when method **500** is not being carried out, the processor **205** may scale the output to fit within the display area **350** when the method is carried out. It will be appreciated that if the processor **205** does not scale the output from the computer application **230**, any output intended to be rendered outside of the display area **350** would simply be truncated.

At block **520,** the processor **205** renders the plurality of virtual keys **320**a-e on the touchscreen **102**. In this implementation, the plurality of virtual keys **320**a-e are enabled to receive input at the touchscreen **102** corresponding to the application input data for the computer application **230** executed by the processor **205**. Again, it will be appreciated that the plurality of virtual keys is not limited to exactly five virtual keys and that the subset may include more or less virtual keys depending on the requirements of the computer application **230**.

When the processor **205** renders the plurality of virtual keys **320**a-e as described in block **520**, the processor **205** may further render the plurality of virtual keys **320**a-e outside of the display area **350**. By placing the plurality of virtual keys **320**a-e outside of the display area **350** (as shown in Figure **4**), the plurality of virtual keys **320**a-e will not overlap with any portion of the output rendered from the computer application **230**. Therefore, this will prevent obscuring the output rendered from the computer application **230** since the plurality of virtual keys **320**a-e remain on the touchscreen **102** indefinitely.

In the present implementation of the touchscreen device **100**, method **400** or method **500** provides a means to receive input efficiently from the touchscreen for the computer application **230**. In contrast to using the full virtual keyboard **310** during execution of the computer application **230**, placing the plurality of virtual keys **320**a-e allows for the output from the application to be rendered on the touchscreen **102** with minimal obstruction by the input elements. Although the methods **400** and **500** discussed above may be carried out before the execution of computer application **230**, it should be recognized that the methods may be carried out during the execution of the computer application.

While specific implementations of the invention have been described and illustrated, such implementations should be considered illustrative of the invention only and not as limiting the invention, the scope of which is defined by the accompanying claims.

## Claims

1. A touchscreen device (100) comprising a processor (205) and a touchscreen (102), the processor (205) operably configured to:
receive input indicative of a selection of input elements for a subset of input elements from a set of given input elements, the subset for providing application input data to a computer application (230), the subset displayable on the touchscreen (102);
receive further input indicative of a size and location of a display area (350), the display area (350) for rendering output from the computer application (230), wherein the display area (350) is smaller than the touchscreen (102); and
render the subset on the touchscreen (102) such that the subset is operably configured to receive the application input data, the subset being rendered outside the display area (350) and remaining on the touchscreen (102) as long as the computer application (230) is running.

2. The touchscreen device (100) of claim 1, wherein the processor (205) is operably configured to scale the output such that the output is completely rendered within the display area (350).

3. The touchscreen device (100) of claim 1 or 2, wherein the processor (205) is operably configured to receive further input indicative of a selection of a location on the touchscreen (102) such that a selected input element of the subset is rendered at the location.

4. The touchscreen device (100) of any one of claims 1 to 3 wherein the processor (205) is operably configured to receive data indicative of a selection from a list.

5. The touchscreen device (100) of any one of claims 1 to 4 wherein the processor (205) is further operably configured to change sizes and shapes of the input elements (325a-e).

6. A method comprising:
receiving, at a touchscreen device (100) including a processor (205) and a touchscreen (102), input indicative of a selection of input elements for a subset of input elements from a set of given input elements, the subset for providing application input data to a computer application (230), the subset displayable on the touchscreen (102);
receiving further input indicative of a size and location of a display area (350), the display area (350) for rendering output from the computer application (230), wherein the display area (350) is smaller than the touchscreen (102); and
rendering the subset on the touchscreen (102) such that the subset is operably configured to receive the application input data, the subset being rendered outside the display area (350) and remaining on the touchscreen (102) as long as the computer application (230) is running.

7. The method of claim 6, further comprising scaling the output such that the output is rendered within the display area (350).

8. The method of claim 6 or 7, further comprising receiving further input indicative of a selection of a location on the touchscreen (102) such that a selected input element of the subset is rendered at the location.

9. The method of any one of claims 6 to 8, wherein the input indicative of populating the subset comprises data indicative of a drag-and-drop selection on the touchscreen (102).

10. The method of any one of claims 6 to 9 wherein receiving the input indicative of populating the subset comprises receiving data indicative of a selection from a list.

11. The method of any one of claims 6 to 10 wherein receiving the input indicative of populating the subset comprises receiving data from an input device other than the touchscreen (102).

12. The method of any one of claims 6 to 11 further comprising changing sizes and shapes of the input elements (325a-e).

## Patentansprüche

1. Berührungsbildschirmvorrichtung (100), umfassend einen Prozessor (205) und einen Berührungsbildschirm (102), wobei der Prozessor (205) betriebsfähig zu Folgendem konfiguriert ist:
Empfangen von Eingabe, die eine Auswahl von Eingabeelementen für einen Teilsatz von Eingabeelementen aus einem Satz von gegebenen Eingabeelementen anzeigt, wobei der Teilsatz dem Zuführen von Anwendungseingabedaten zu einer Rechneranwendung (230) dient, wobei der Teilsatz auf dem Berührungsbildschirm (102) anzeigbar ist;
Empfangen von weiterer Eingabe, die eine Größe und einen Ort eines Anzeigebereichs (350) anzeigt, wobei der Anzeigebereich (350) dem Wiedergeben einer Ausgabe von der Rechneranwendung (230) dient, wobei der Anzeigebereich (350) kleiner als der Berührungsbildschirm (102) ist; und
Wiedergeben des Teilsatzes auf dem Berührungsbildschirm (102), sodass der Teilsatz betriebsfähig zum Empfangen der Anwendungseingabedaten konfiguriert ist, wobei der Teilsatz außerhalb des Anzeigebereichs (350) wiedergegeben wird und auf dem Berührungsbildschirm (102) verbleibt, solange die Rechneranwendung (230) läuft.

2. Berührungsbildschirmvorrichtung (100) nach Anspruch 1, wobei der Prozessor (205) betriebsfähig zum Skalieren der Ausgabe konfiguriert ist, sodass die Ausgabe vollständig innerhalb des Anzeigebereichs (350) wiedergegeben wird.

3. Berührungsbildschirmvorrichtung (100) nach Anspruch 1 oder 2, wobei der Prozessor (205) betriebsfähig zum Empfangen von weiterer Eingabe konfiguriert ist, die eine Auswahl eines Orts auf dem Berührungsbildschirm (102) anzeigt, sodass ein ausgewähltes Eingabeelement des Teilsatzes an dem Ort wiedergegeben wird.

4. Berührungsbildschirmvorrichtung (100) nach einem der Ansprüche 1 bis 3, wobei der Prozessor (205) betriebsfähig zum Empfangen von Daten konfiguriert ist, die eine Auswahl aus einer Liste anzeigen.

5. Berührungsbildschirmvorrichtung (100) nach einem der Ansprüche 1 bis 4, wobei der Prozessor (205) ferner betriebsfähig zum Ändern von Größen und Formen der Eingabeelemente (325a-e) konfiguriert ist.

6. Verfahren, umfassend:
Empfangen, an einer Berührungsbildschirmvorrichtung (100), die einen Prozessor (205) und einen Berührungsbildschirm (102) enthält, von Eingabe, die eine Auswahl von Eingabeelementen für einen Teilsatz von Eingabeelementen aus einem Satz von gegebenen Eingabeelementen anzeigt, wobei der Teilsatz dem Zuführen von Anwendungseingabedaten zu einer Rechneranwendung (230) dient, wobei der Teilsatz auf dem Berührungsbildschirm (102) anzeigbar ist;
Empfangen von weiterer Eingabe, die eine Größe und einen Ort eines Anzeigebereichs (350) anzeigt, wobei der Anzeigebereich (350) dem Wiedergeben einer Ausgabe von der Rechneranwendung (230) dient, wobei der Anzeigebereich (350) kleiner als der Berührungsbildschirm (102) ist; und
Wiedergeben des Teilsatzes auf dem Berührungsbildschirm (102), sodass der Teilsatz betriebsfähig zum Empfangen der Anwendungseingabedaten konfiguriert ist, wobei der Teilsatz außerhalb des Anzeigebereichs (350) wiedergegeben wird und auf dem Berührungsbildschirm (102) verbleibt, solange die Rechneranwendung (230) läuft.

7. Verfahren nach Anspruch 6, ferner umfassend Skalieren der Ausgabe, sodass die Ausgabe vollständig innerhalb des Anzeigebereichs (350) wiedergegeben wird.

8. Verfahren nach Anspruch 6 oder 7, ferner umfassend Empfangen von weiterer Eingabe, die eine Auswahl eines Orts auf dem Berührungsbildschirm (102) anzeigt, sodass ein ausgewähltes Eingabeelement des Teilsatzes an dem Ort wiedergegeben wird.

9. Verfahren nach einem der Ansprüche 6 bis 8, wobei die Eingabe, die Auffüllen des Teilsatzes anzeigt, Daten umfasst, die eine Drag-and-Drop-Auswahl auf dem Berührungsbildschirm (102) anzeigen.

10. Verfahren nach einem der Ansprüche 6 bis 9, wobei Empfangen der Eingabe, die Auffüllen des Teilsatzes anzeigt, Empfangen von Daten umfasst, die eine Auswahl aus einer Liste anzeigen.

11. Verfahren nach einem der Ansprüche 6 bis 10, wobei Empfangen der Eingabe, die Auffüllen des Teilsatzes anzeigt, Empfangen von Daten von einer anderen Eingabevorrichtung als dem Berührungsbildschirm (102) umfasst.

12. Verfahren nach einem der Ansprüche 6 bis 11, ferner umfassend Ändern von Größen und Formen der Eingabeelemente (325a-e).

## Revendications

1. Dispositif d'écran tactile (100) comprenant un processeur (205) et un écran tactile (102), le processeur (205) étant configuré de manière opérationnelle pour:
recevoir une entrée indicative d'une sélection d'éléments d'entrée pour un sous-ensemble d'éléments d'entrée à partir d'un ensemble d'éléments d'entrée donnés, le sous-ensemble fournissant des données d'entrée d'application à une application informatique (230), le sous-ensemble pouvant être affiché sur l'écran tactile (102);
recevoir une autre entrée indiquant une taille et un emplacement d'une zone d'affichage (350), la zone d'affichage (350) restituant la sortie de l'application informatique (230), dans laquelle la zone d'affichage (350) est plus petite que l'écran tactile (102); et
restituer le sous-ensemble sur l'écran tactile (102) de telle sorte que le sous-ensemble soit configuré de manière opérationnelle pour recevoir les données d'entrée d'application, le sous-ensemble étant resitué en dehors de la zone d'affichage (350) et restant sur l'écran tactile (102) tant que l'application informatique (230) est en cours d'exécution.

2. Dispositif d'écran tactile (100) selon la revendication 1, dans lequel le processeur (205) est configuré de manière opérationnelle pour mettre à l'échelle la sortie de telle sorte que la sortie soit complètement restituée dabs la zone d'affichage (350).

3. Dispositif d'écran tactile (100) selon la revendication 1 ou 2, dans lequel le processeur (205) est configuré de manière opérationnelle pour recevoir une entrée supplémentaire indiquant une sélection d'un emplacement sur l'écran tactile (102) de telle sorte qu'un élément d'entrée sélectionné du sous-ensemble soit restitué à cet emplacement.

4. Dispositif d'écran tactile (100) selon une quelconque des revendications 1 à 3, dans lequel le processeur (205) est configuré de manière opérationnelle pour recevoir des données indiquant une sélection dans une liste.

5. Dispositif d'écran tactile (100) selon une quelconque des revendications 1 à 4, dans lequel le processeur (205) est en outre configuré de manière fonctionnelle pour modifier les tailles et les formes des éléments d'entrée (325a-e).

6. Procédé comprenant de:
recevoir, au niveau d'un dispositif à écran tactile (100) comprenant un processeur (205) et un écran tactile (102), une entrée indiquant une sélection d'éléments d'entrée pour un sous-ensemble d'éléments d'entrée à partir d'un ensemble d'éléments d'entrée donnés, le sous-ensemble fournissant une application des données d'entrée dans une application informatique (230), le sous-ensemble pouvant être affiché sur l'écran tactile (102);
recevoir en outre une entrée indiquant une taille et un emplacement d'une zone d'affichage (350), la zone d'affichage (350) restituant la sortie de l'application informatique (230), dans lequel la zone d'affichage (350) est plus petite que l'écran tactile (102); et
restituer le sous-ensemble sur l'écran tactile (102) de telle sorte que le sous-ensemble soit configuré de manière opérationnelle pour recevoir les données d'entrée d'application, le sous-ensemble étant restitué en dehors de la zone d'affichage (350) et restant sur l'écran tactile (102) aussi longtemps que l'application informatique (230) est en cours d'exécution.

7. Procédé selon la revendication 6, comprenant en outre la mise à l'échelle de la sortie de telle sorte que la sortie soit restituée dans la zone d'affichage (350).

8. Procédé selon la revendication 6 ou 7, comprenant en outre la réception d'une entrée supplémentaire indiquant une sélection d'un emplacement sur l'écran tactile (102) de telle sorte qu'un élément d'entrée sélectionné du sous-ensemble soit restitué à l'emplacement.

9. Procédé selon une quelconque des revendications 6 à 8, dans lequel l'entrée indiquant le remplissage du sous-ensemble comprend des données indicatives d'une sélection par glisser-déposer sur l'écran tactile (102) .

10. Procédé selon une quelconque des revendications 6 à 9, dans lequel la réception de l'entrée indiquant le remplissage du sous-ensemble comprend la réception de données indicatives d'une sélection dans une liste.

11. Procédé selon une quelconque des revendications 6 à 10, dans lequel la réception de l'entrée indicative de remplissage du sous-ensemble comprend la réception de données d'un dispositif d'entrée autre que l'écran tactile (102).

12. Procédé selon une quelconque des revendications 6 à 11, comprenant en outre la modification de tailles et de formes des éléments d'entrée (325a-e).
